# EUROPEAN PATENT APPLICATION

(11) **EP 4 434 715 A1**
(43) Date of publication of application: **25.09.2024**
(21) Application number: 24164579.5
(22) Date of filing: 19.03.2024
(51) Int. Cl.: B29C 45/14, B29K 63/00, B29K 67/00, B29L 31/00

(54) **METHOD FOR REALIZING EMBOSSED DECORATIVE ELEMENTS ON PHYSICAL SUPPORTS**

(30) Priority: 20.03.2023 IT 202300005175
(71) Applicant: Rotas Italia S.r.l., 31100 Treviso (IT)
(72) Inventor: CELANTE, Francesco, 31100 Treviso (IT); CALENDA, Marco, 31053 Pieve di Soligo (TV) (IT)
(74) Representative: Dragotti & Associati S.R.L.

(57) **Abstract**

Method for realizing embossed decorative elements on physical supports, comprising a step i) of providing a physical support (B) with a visible surface (B1); a step ii) of arranging on the support (B) a mould (S) provided with a cavity (C) having an opening (A) formed on a surface (S1) of the mould (S), said surface (S1) being placed in contact with the visible surface (B1) of the physical support (B) so that the visible surface (B1) closes the cavity (C) of the mould (S), a step iii) involving melting and extrusion of a thermoplastic polymer material and injection of the melted thermoplastic polymer material inside the cavity (C), the injected thermoplastic polymer material being designed to come into contact with the visible surface (B1) of the physical support (B), a step iv) of cooling and hardening of the injected thermoplastic polymer material so as to obtain the embossed decorative element, and a step v) of removal of the mould (S) from the physical support (B).

## Description

The present invention relates to the technical field of the production of physical supports, such as labels, provided with decorative elements, and in particular relates to a method for realizing embossed decorative elements on physical supports.

In the technical field of physical supports, in particular labels, plates or ribbons, to be applied onto products or articles so as to allow identification thereof, it is known to realize embossed elements on the supports.

These embossed elements project by a predetermined amount from the visible surface of the physical support and may be obtained by means of micro-injection or over-injection of a thermoplastic material onto the material forming the physical support and formed, for example, by rubber or fabric or also metal.

Alternatively, if the embossed elements and the support are made with the same material, they may be made by means of a single initial moulding process.

The embossed elements have mainly a decorative function or function of identifying the article onto which the physical support is applied.

For example, US5676981 discloses a method for realizing, by means of injection moulding, an article with a decorative sheet, the sheet being positioned beforehand inside the mould intended to perform the injection moulding. In this method the mould is formed by a male component and by a female component.

Alternatively, the elements obtained by means of micro-injection or over-injection may also have the function of allowing joining together of the physical support and the product/article.

For example, EP1325687 discloses a metal plate with a microperforated perimetral strip onto which extruded thermoplastic polymer material is injected, with the aid of a suitable forming mould, in order to obtain tabs projecting from the edges of the plate, where the final stitching operation is performed in order to fix the plate to the corresponding article.

The technical solutions described above, although widely known and favourably regarded in the field, are not without a number of drawbacks.

A first drawback consists in the fact that these technical solutions require the use of particularly complex equipment in order to form the embossed elements on the supports, at the very least requiring a certain amount of skill by the operators involved. A further drawback consists in the fact that the procedures described above are particularly long and complex and result in an increase in the overall production costs. Another drawback consists in the fact that the choice of thermoplastic polymer material for the formation of the embossed element is often conditioned by the type of material of the physical support.

The main object of the present invention is to provide a method for forming embossed decorative elements on physical supports, which is able to solve the aforementioned problems.

A particular task of the present invention is to provide a method of the type described above which is able to form embossed decorative elements with a definition comparable to the definition which can be obtained with the methods known in the field.

Another task of the present inventio is to provide a method of the type described above which does not require the use of particularly complex equipment.

Another task of the present invention is to provide a method of the type described above which is particularly simple and rapid or at least involves shorter processing times compared to the methods known in the field.

A further task of the present invention is to provide a method of the type described above which is able to form embossed decorative elements on various types of physical supports made with different materials.

The object and main tasks described above are achieved with a method for forming embossed decorative elements on physical supports in accordance with claim 1.

In order to illustrate more clearly the innovative principles of the present invention and its advantages compared to the prior art, an example of embodiment of the method according to the present invention will be described below with the aid of the attached figures. In particular:
- Figure 1 is a schematic cross-sectional view of a step of the method for realizing embossed decorative elements on the physical supports according to the present invention;
- Figure 2 is a perspective view from a first angle of a mould used in the method of the present invention;
- Figure 3 is a perspective view from another angle of the mould used in the method of the present invention.

The present description, which is provided solely by way of a non-limiting illustration of the scope of protection of the invention, refers to a method for forming embossed decorative elements on physical supports.

Advantageously, the physical support material B may be chosen from the group comprising for example paper, fabrics and plastic materials.

However, the physical supports may also be made using different materials without thereby departing from the scope of protection of the present invention.

Preferably, the physical support B on which the images are printed consists of a label intended to be applied onto a product or an article, such as a bottle.

Obviously, the article may also consist of different articles, objects or devices, without thereby departing from the scope of the present invention.

Alternatively, the formation of the embossed decorative elements may also be carried out on labels already applied on a specific product or article and having also a predetermined concavity or convexity.

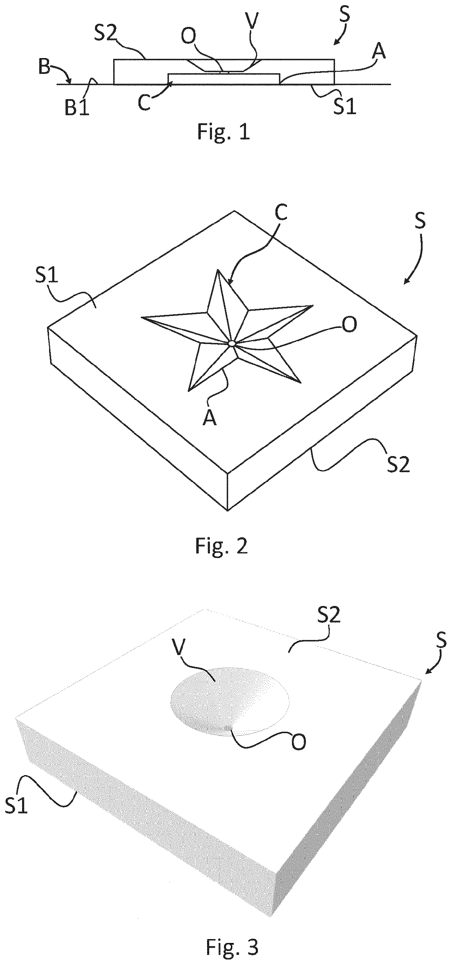

The method comprises preferably the following steps:
i) providing the physical support B with a visible surface B1;
ii) arranging on the support B a mould S provided with a cavity C having an opening A formed on a surface S1 of the mould S, said surface S1 being placed in contact with the visible surface B1 of the physical support B so that the visible surface B1 closes the opening A and the cavity C of the mould S (see Figure 1);
iii) melting and extrusion of a thermoplastic polymer material and injection of the molten thermoplastic polymer material inside the cavity C, the injected thermoplastic polymer material being able to come into contact with the visible surface B1 of the support B;
iv) cooling and hardening of the injected thermoplastic polymer material in order to obtain the embossed decorative element;
v) removal of the mould S from the physical support B.

In accordance with the invention, in the present context, the term "mould" identifies only the component of a mould which is generally qualified by the term "female" or "shell", the use of the male component not being envisaged in the present method. Before the step ii) of providing the mould S on the support B, the method may comprise a step of treating the visible surface B1 by means of a process which uses the corona effect and/or a step of applying a film or a paint on the inner wall of the cavity C of the mould S used to perform step ii).

Treatments may also be envisaged for the visible surface B1 of the physical support B which are different from the treatment indicated above and are particularly suitable for favouring adhesion of the hardened thermoplastic material on said surface B1. Moreover, the mould S is of the type shown in the detail of Figures 2 and 3 and is made preferably by means of 3D printing of a high-temperature resin, for example a high-temperature epoxy resin.

In particular, the process of moulding the mould S is performed so that the mould S has a printing resolution along the axis z of between 0.1 mm and 0.025 mm, namely is formed by deposited layers of resin with a thickness in the range indicated above.

Said resolution facilitates the removal of the mould S of the embossed decorative element following cooling and hardening of the thermoplastic polymer material.

In this connection, the thermoplastic polymer material may consist of PLA (polylactic acid) and may have, added thereto, metal particles and/or waxes so as to form corresponding mixtures.

In a manner known per se, the PLA is intended to undergo the melting step at a temperature close to 240°C.

Therefore, the melting, extrusion and injection step iii) is suitably performed by means of a gear extruder and a heated nozzle which work within a temperature range of between 200°C and 400°C.

The gear extruder and the nozzle are of the type known per se in the field and are not shown in the attached figures.

The thermoplastic material, namely PLA, is fed to the extruder preferably in the form of a coiled wire; alternatively, the material may be fed to the extruder also in the form pellets.

The melted and extruded polymer material is injected inside the cavity C through an orifice O formed in the mould S, in particular along the surface S2 of the mould S opposite to the surface S1 in which the opening A of the cavity C is formed. Conveniently, the step of injecting the melted and extruded thermoplastic polymer material may have a duration of not more than two seconds.

Advantageously, as shown more clearly in Figures 1 and 3, the mould S also comprises on the surface S2 with the feeding orifice O a basin V for collecting the melted and extruded thermoplastic polymer material, which is in fluid communication with the cavity C via the orifice O.

The heated nozzle described above and designed to receive the melted material from the extruder is intended to be placed in fluid communication with the collection basin V. Conveniently, the basin V has the function of minimizing the visibility of the injection point on the embossed decorative element at the end of the formation process and of controlling precisely the quantity of melted material to be fed to the cavity C.

With reference to this latter arrangement, the control carried out during the injection step allows a minimum amount of melted material to be used in order to fill the cavity C of the mould S, said quantity depending on the form and thickness of the embossed decorative element to be obtained.

Furthermore, the use of a minimum amount of melted material to be injected into the cavity C allows a relatively low pressure to be maintained inside the cavity C.

These measures help maintain the seal between the mould S and the physical support B, irrespective as to the material from which the latter is made, during the injection step, thus preventing the injected material from coming out through the opening A. Moreover, the internal volume of the cavity C of the mould S is also chosen so as to allow adjustment and control the realization of the embossed decorative elements on the physical support B.

Said internal volume has preferably a value of not more than 0.30 cm³; for example, for the embodiment illustrated in the present invention in which the opening A has a star shape, the volume is equal to 0.24 cm³.

The thickness of the mould S, and therefore the height of the cavity C measured from the surface S1 with the opening A determines the height or level of the embossed decorative element at the end of the formation process.

The shape of the edge which delimits the opening A of the cavity C corresponds to the external profile of the decorative element to be formed on the physical support B. Moreover, as shown more clearly in Figure 2, the internal walls of the cavity C may be machined so as to have a predefined profile such that the corresponding embossed parts of the decorative elements also have said predefined profile.

As already mentioned above and as shown by way of example in Figure 2, in the embodiment described here the opening A of the mould S has a star shape and the cavity C has inset inner faces so that the decorative element to be obtained has the form of a star with sloping faces and the vertex located at a greater height from the visible surface B1 of the support B than the pointed ends of the star.

However, the opening A and the cavity C may also have different shapes, without thereby departing from the scope of protection of the present invention.

From the above description it is now clear how the method according to the present invention is able to achieve advantageously the predefined objects.

In particular, the use of the aforementioned mould and the injection of the thermoplastic polymer material enable embossed decorative elements to be obtained on physical supports with a high degree of definition and without using particularly complex equipment.

Moreover, the method described above has realization times which are particularly shorter compared to the known methods, allowing the entire process for realization of the supports, namely the labels, with the embossed decorative elements to be speeded up.

Obviously, the above description of embodiments applying the innovative principles of the present invention is provided by way of example of these innovative principles and must therefore not be regarded as limiting the scope of the rights claimed herein.

## Claims

1. Method for realizing embossed decorative elements on physical supports, the method comprising the following steps:
i) providing a physical support (B) with a visible surface (B1);
ii) arranging on the support (B) a mould (S) provided with a cavity (C) having an opening (A) formed on a surface (S1) of the mould (S), said surface (S1) being placed in contact with the visible surface (B1) of the physical support (B) so that the visible surface (B1) closes the opening (A) and the cavity (C);
iii) melting and extrusion of a thermoplastic polymer material and injection of the molten thermoplastic polymer material inside said cavity (C), the injected thermoplastic polymer material being able to come into contact with the visible surface (B1) of the physical support (B);
iv) cooling and hardening of the injected thermoplastic polymer material in order to obtain the embossed decorative element;
v) removal of the mould (S) from the physical support (B).

2. Method according to the preceding claim, **characterized in that** the mould (S) is made by means of 3D printing with a high-temperature resin.

3. Machine according to the preceding claim, **characterized in that** the moulding resolution of said mould (S) along the axis z is between 0.1 mm and 0.025 mm.

4. Method according to any one of the preceding claims, **characterized in that** said mould (S) comprises, on the surface (S2) opposite the surface (S1) with the opening (A), a basin (V) for collecting the melted and extruded thermoplastic polymer material in fluid communication with said cavity (C) via a feeding orifice (O).

5. Method according to the preceding claim, **characterized in that** said extrusion and injection step iii) is performed by means of a gear extruder and a heated nozzle intended to be connected in fluid communication with said collection basin (V).

6. Method according to any one of the preceding claims, **characterized in that** the thermoplastic polymer material is PLA.

7. Method according to any one of the preceding claims, **characterized in that** the thermoplastic polymer material has metal particles and/or wax added thereto.

8. Method according to any one of the preceding claims, **characterized in that** the material of said physical support (B) is chosen from the group comprising paper, fabrics and plastic materials.

9. Method according to any one of the preceding claims, **characterized in that** said physical support (S) is a label intended to be applied onto a product or a label applied onto a product.

10. Method according to any one of the preceding claims, **characterized in that** it comprises, before the step (ii) of arranging the mould (S) on the physical support (B), a step of treating the visible surface (B1) of the physical support (B) by means of the corona effect and/or a step of applying a film or a paint onto the inner wall of the cavity (C) of said mould (S).

11. Method according to any one of the preceding claims, **characterized in that** said injection step iii) has a duration of not more than two seconds.
